# EUROPÄISCHE PATENTSCHRIFT

(11) **EP 2 433 285 B1**
(45) Veröffentlichungstag und Bekanntmachung des Hinweises auf die Patenterteilung: **09.01.2013**
(21) Anmeldenummer: 10732887.4
(22) Anmeldetag: 12.05.2010
(51) Int. Cl.: F16L 55/32, G01N 27/90, G21C 17/013, G21C 17/017

(54) **VERFAHREN UND VORRICHTUNG ZUM PRÜFEN EINER RINGFÖRMIGEN SCHWEISSNAHT EINER AN EINEM REAKTORDRUCKBEHÄLTER EINES KERNKRAFTWERKES ANGESCHLOSSENEN HAUPTKÜHLMITTELLEITUNG**
METHOD AND APPARATUS FOR INSPECTING AN ANNULAR WELD ON A MAIN COOLANT PIPE CONNECTED TO A REACTOR PRESSURE VESSEL IN A NUCLEAR POWER PLANT
PROCÉDÉ ET DISPOSITIF DE CONTRÔLE D'UN CORDON DE SOUDURE ANNULAIRE D'UNE CANALISATION PRINCIPALE DE FLUIDE DE REFROIDISSEMENT RACCORDÉE À UN RÉSERVOIR SOUS PRESSION DU RÉACTEUR D'UNE CENTRALE NUCLÉAIRE

(30) Priorität: 20.05.2009 DE 102009026405
(43) Veröffentlichungstag der Anmeldung: 28.03.2012
(73) Patentinhaber: Areva NP GmbH, 91052 Erlangen (DE)
(72) Erfinder: BISCHOFF, Bernd, 91334 Hemhofen (DE); STAUDIGEL, Robert, 91315 Höchstadt (DE)
(74) Vertreter: Mörtel & Höfner
(86) Internationale Anmeldenummer: PCT/EP2010/056549
(87) Internationale Veröffentlichungsnummer: WO 2010/133493

(56) Entgegenhaltungen:
- DE-A1- 3 412 519
- US-A- 6 104 772
- US-A1- 2006 227 921

## Beschreibung

Die Erfindung bezieht sich auf ein Verfahren und eine Vorrichtung zum Prüfen einer ringförmigen Schweißnaht einer an einen Reaktordruckbehälter eines Kernkraftwerkes angeschlossenen Hauptkühlmittelleitung.

Zur Gewährleistung der Betriebssicherheit eines Kernreaktors ist es unter anderem erforderlich, die ringförmigen Schweißnähte einer an einen Reaktordruckbehälter angeschlossenen Hauptkühlmittelleitung mit Methoden der zerstörungsfreien Werkstoffprüfung zu inspizieren. Bei einer solchen Inspektion wird von der Hauptkühlmittelleitung das diese umgebende Isolationsmaterial entfernt, und es werden die Schweißnähte mit geeigneten Prüfmanipulatoren von außen geprüft. Die Hauptkühlmittelleitungen sind jedoch abhängig von deren Betriebsdauer in einem hohen Maße aktiviert. Daher müssen zum Schutz des Bedienpersonals, das die Werkstoffprüfung und die Installation der hierzu erforderlichen Prüfgeräte durchführt, zusätzliche, mit Bleiabschirmungen versehene Schutzzonen eingerichtet werden. Trotz dieser Schutzzonen ist eine zu einer hohen Dosisbelastung des Bedienpersonals führende unmittelbare Strahlenexposition nicht vollständig vermeidbar.

Aus der US 6,104,772 A ist es bekannt, in eine von einem Dampferzeuger ausgehende Hauptkühlmittelleitung einen Rohrinnenmanipulator einzubringen, der innerhalb der Hauptkühlmittelleitung auf in dieser verspreizten Rollen verfahren werden kann und an seiner Stirnseite eine Prüfeinrichtung trägt. Um den Rohrinnenmanipulator in die Hauptkühlmittelleitung einbringen zu können, ist jedoch eine aufwändige Hilfsvorrichtung notwendig.

Weitere selbstfahrende Tauchfahrzeuge mit Prüfeinrichtungen und radial ausfahrbaren Spreizarmen sind aus der DE 3412519 A1 und der US 2006/0227921 A1 bekannt.

Der Erfindung liegt deshalb die Aufgabe zugrunde, ein vereinfachtes Verfahren und eine vereinfachte Vorrichtung zum Prüfen einer ringförmigen Schweißnaht einer an einen Reaktordruckbehälter eines Kernkraftwerkes angeschlossenen Hauptkühlmittelleitung anzugeben, bei denen die Dosisbelastung des Bedienpersonals gegenüber dem bekannten Verfahren signifikant verringert ist.

Hinsichtlich des Verfahrens wird die genannte Aufgabe gelöst mit einem Verfahren mit den Merkmalen des Patentanspruches 1. Bei diesem Verfahren wird in den geöffneten und gefluteten Reaktordruckbehälter ein selbstfahrendes Tauchfahrzeug eingebracht, das an jeder Stirnseite eine an die Innenumfangsfläche der Hauptkühlmittelleitung anstellbare und in deren Umfangsrichtung verfahrbare Prüfeinrichtung enthält. Das Tauchfahrzeug wird anschließend ausgehend vom Reaktordruckbehälter in die ebenfalls geflutete Hauptkühlmittelleitung eingefahren und dort durch radial ausfahrbare Spreizarme im Bereich der Schweißnaht fixiert. Anschließend wird die Prüfeinrichtung an die Schweißnaht angestellt und entlang der Schweißnaht in Umfangsrichtung verfahren.

Durch die Verwendung eines eine Prüfeinrichtung tragenden und in das Innere der Hauptkühlmittelleitung einfahrbaren Tauchfahrzeugs kann die Prüfung der Schweißnaht von innen erfolgen, so dass die dosisbelastende, im Stand der Technik durchgeführte Außenprüfung nicht mehr erforderlich ist.

Da bei dem Tauchfahrzeug eine Prüfeinrichtung an jeder Stirnseite angeordnet ist, und das Tauchfahrzeug zum Prüfen einer Schweißnaht, mit der ein bogenförmiger Abschnitt der Hauptkühlmittelleitung an seinen Stirnseiten mit einem geradlinig verlaufenden Abschnitt der Hauptkühlmittelleitung verschweißt ist, mit den Spreizarmen in dem geradlinig verlaufenden Abschnitt der Hauptkühlmittelleitung derart fixiert wird, dass eine die Prüfeinrichtung enthaltende Stirnseite der Schweißnaht zugewandt ist, können Schweißnähte im Bereich eines Rohrbogens besonders einfach und schnell geprüft werden. Das Tauchfahrzeug kann nämlich in dem geradlinigen Abschnitt der Hauptkühlmittelleitung derart fixiert werden, dass seine Mittenlängsachse zumindest annähernd koaxial zur Mittenachse des geradlinigen Abschnittes und damit auch zur Mittenachse der ringförmigen Schweißnaht ausgerichtet ist. Dadurch wird die zur Durchführung der Prüfung erforderliche Bewegung der Prüfeinrichtung vereinfacht, da diese, nachdem sie an die Schweißnaht angestellt ist, nur noch um die Mittenlängsachse des Tauchfahrzeuges gedreht und allenfalls zusätzlich in radiale Richtung bewegt werden muss, wenn die Mittenlängsachse nicht exakt koaxial zur Mittenachse der im Idealfall kreisringförmigen Schweißnaht ausgerichtet ist, oder wenn die ringförmige Schweißnaht eine nicht exakt kreisringförmige Gestalt hat.

Da an jeder Stirnseite eine Prüfeinrichtung angeordnet ist, ist es möglich, mit nur einer einzigen Tauchfahrt beide ringförmige Schweißnähte zu prüfen, mit denen ein bogenförmiger Abschnitt an seinen Stirnseiten jeweils mit einem geradlinig verlaufenden Abschnitt der Hauptkühlmittelleitung verschweißt ist. Mit anderen Worten: Mit der in Fahrtrichtung an der vorderen Stirnseite angeordneten Prüfeinrichtung kann die vor dem Tauchfahrzeug liegende Schweißnaht geprüft werden, und mit der an der hinteren Stirnseite angeordneten Prüfeinrichtung kann die nach dem Durchfahren des bogenförmigen Abschnittes hinter dem Tauchfahrzeug liegende Schweißnaht geprüft werden, wobei in beiden Fällen das Tauchfahrzeug in einem geradlinigen Abschnitt verspreizt ist. Dadurch ist die Gesamtdauer der Prüfung zusätzlich verringert, da ein Tauchfahrzeug, bei dem die Prüfeinrichtung nur an einer Stirnseite angeordnet ist, nach Durchfahren der Hauptkühlmittelleitung vollständig zurückgefahren, gewendet und erneut in die Hauptkühlmittelleitung eingefahren werden muss.

Hinsichtlich der Vorrichtung wird die Aufgabe gemäß der Erfindung gelöst mit einer Vorrichtung mit den Merkmalen des Patentanspruches 4.

Vorteilhafte Ausgestaltungen des Verfahrens bzw. der Vorrichtung sind in den jeweiligen Unteransprüchen angegeben.

Zur weiteren Erläuterung der Erfindung wird auf das Ausführungsbeispiel der Zeichnung verwiesen. Es zeigen:

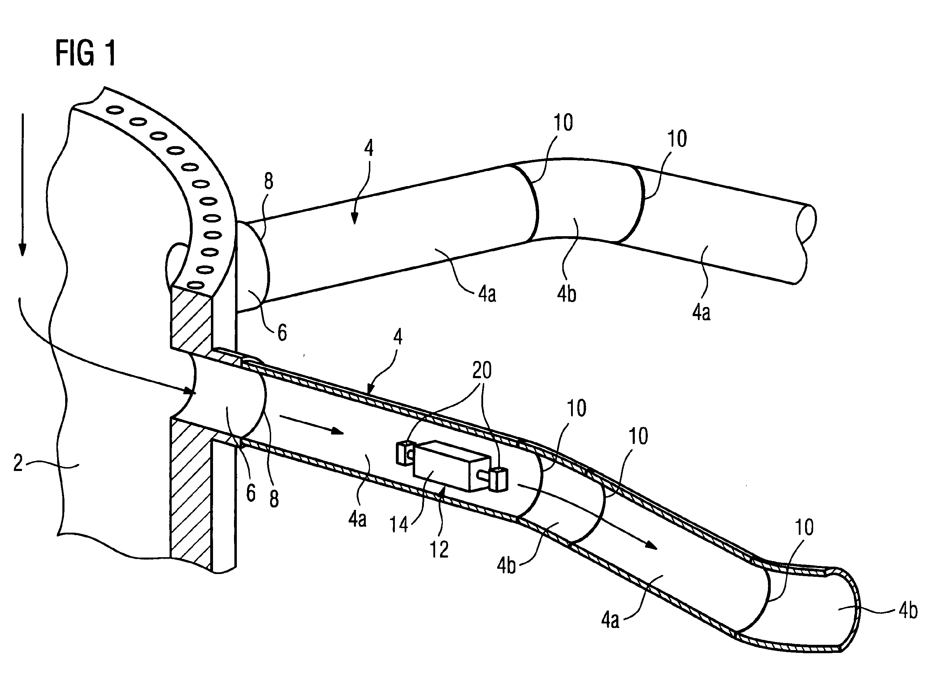

Fig. 1 einen geöffneten Reaktordruckbehälter sowie daran angeschlossene Hauptkühlmittelleitungen mit einem im Inneren einer Hauptkühlmittelleitung befindlichen Tauchfahrzeug gemäß der Erfindung in einer schematischen Prinzipdarstellung,

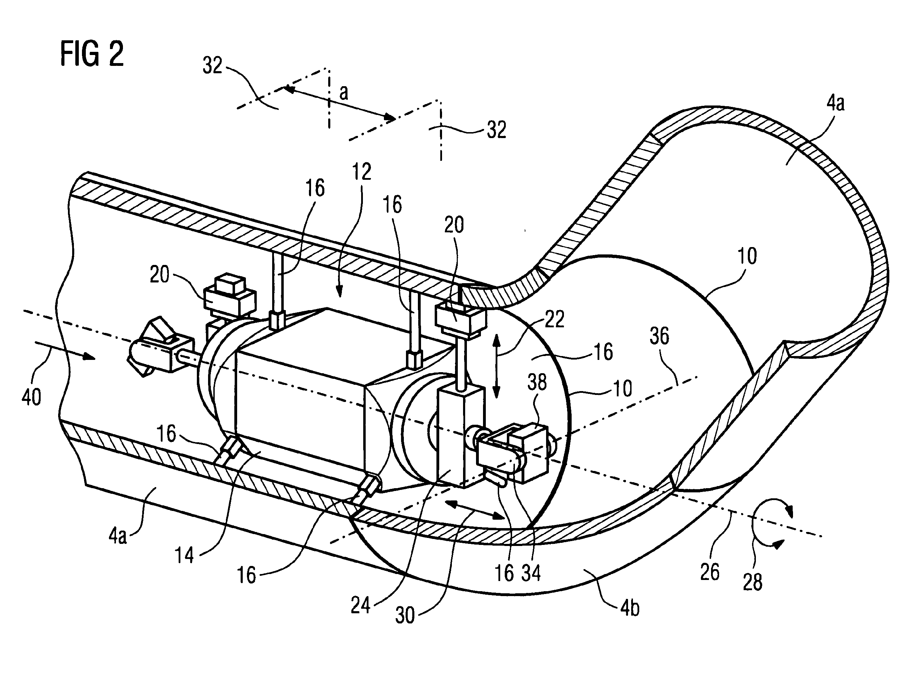

Fig. 2 das Tauchfahrzeug gemäß der Erfindung in Prüfposition an einer im Bereich eines Rohrbogens befindlichen Schweißnaht. Gemäß Fig. 1 mündet in einen Reaktordruckbehälter 2 eines Kernkraftwerkes eine Mehrzahl von Hauptkühlmittelleitungen 4. Diese Hauptkühlmittelleitungen 4 sind mit Anschlussstutzen 6 des Reaktordruckbehälters 2 jeweils mit einer ringförmigen Schweißnaht 8 verschweißt und sind aus einer Mehrzahl von geradlinigen und bogenförmigen Abschnitten 4a bzw. 4b zusammengesetzt. Jeder bogenförmige Abschnitt 4b ist an seinen Stirnseiten mit ringförmigen Schweißnähten 10 mit der Stirnseite eines geradlinigen Abschnittes 4a verschweißt.

In den gefluteten Reaktordruckbehälter 2 wird ein selbstfahrendes Tauchfahrzeug 12 eingebracht, das ausgehend vom Innenraum des Reaktordruckbehälters 2 in eine ebenfalls geflutete Hauptkühlmittelleitung 4 eingefahren wird. Das Tauchfahrzeug 12 wird fernbedient innerhalb der Hauptkühlmittelleitung 4 vorwärts bewegt und umfasst einen Basiskörper 14 mit in der Figur nicht dargestellten Antriebsaggregaten zum ferngesteuerten Manövrieren des Tauchfahrzeuges 12 unter Wasser sowie an jeder seiner Stirnseiten eine ebenfalls nur schematisch angedeutete Prüfeinrichtung 20. Das Tauchfahrzeug 12 ist außerdem über eine in der Figur nicht dargestellte elektrische Leitung mit einer Versorgungseinheit verbunden, über die das Tauchfahrzeug 12 mit Energie versorgt wird, und über die Steuersignale sowie Messsignale von der Versorgungseinheit zum Tauchfahrzeug 12 bzw. vom Tauchfahrzeug 12 zur Versorgungseinheit übermittelt werden.

Figur 2 zeigt das Tauchfahrzeug 12 in einer Prüfposition an einer der ringförmigen Schweißnähte 10, mit denen eine geradliniger Abschnitt 4a mit einem bogenförmigen Abschnitt 4b verschweißt ist. Das Tauchfahrzeug 12 wird hierzu in eine Position verfahren, in der sich der Basiskörper 14 noch im geradlinigen Abschnitt 4a der Hauptkühlmittelleitung 4 befindet. In dieser Position wird das Tauchfahrzeug 12 mit einer Mehrzahl von radial ausfahrbaren und an die Innenoberfläche der Hauptkühlmittelleitung 4 anstellbaren Spreizarmen 16 verspannt und auf diese Weise annähernd mittig, d. h. mit seiner Mittenlängsachse 26 zumindest annähernd koaxial zur Mittenachse des geradlinigen Abschnitts 4a der Hauptkühlmittelleitung 4 derart im Bereich der Schweißnaht 10 positioniert und fixiert, dass eine seiner die Prüfeinrichtung 20 enthaltenden Stirnseiten der Schweißnaht 10 zugewandt und so nahe an der Schweißnaht 10 positioniert ist, dass die Prüfeinrichtung 20 an die Schweißnaht 10 angestellt werden kann.

Bei den an jeder Stirnseite des Tauchfahrzeuges 12 angeordneten Prüfeinrichtungen 20 handelt es sich beispielsweise um Ultraschallprüfköpfe, Laserprofilometer oder Wirbelstromprüfköpfe, mit denen eine zerstörungsfreie Prüfung der Schweißnaht 10 durchgeführt werden kann. Jede Prüfeinrichtung 20 ist radial, d. h. senkrecht zur Mittenlängsachse 26 in Richtung des Doppelpfeiles 22 verstell- oder ausfahrbar in einer Halterung 24 gelagert, die in Richtung des Doppelpfeiles 28 drehbar um die Mittenlängsachse 26 des Tauchfahrzeuges 12 am Basiskörper 14 gelagert ist. Die Halterung 24 ist außerdem am Basiskörper 14 in Richtung der Mittenlängsachse 26 axial verschiebbar gelagert, wie es in der Figur 2 durch den Doppelpfeil 30 veranschaulicht ist. Auf diese Weise kann die Prüfeinrichtung 20 bei im geradlinigen Abschnitt 4a fixierten Tauchfahrzeug 12 präzise an der Schweißnaht 10 positioniert werden und durch Drehen der Halterung um die Mittenlängsachse 26 entlang der Schweißnaht 10 in deren Umfangsrichtung verfahren werden.

Die Spreizarme 16 sind in zwei voneinander beabstandeten (Abstand a), senkrecht zur Mittenlängsachse 26 orientierten Spreizebenen 32 angeordnet, die in der Figur strichpunktiert angedeutet sind und sich jeweils im Bereich der Stirnseiten befinden. Dadurch ist eine hinreichende Kippstabilität des Tauchfahrzeuges 12 während des Durchführens der Prüfung gewährleistet. An der Halterung 24 ist außerdem noch ein gabelförmiges Lager 34 für eine um eine senkrecht zur Mittenlängsachse 26 orientierte Schwenkachse 36 schwenkbar gelagerte Inspektionskamera 38 angeordnet, mit der der Prüfvorgang visuell beobachtet werden kann.

Nach erfolgter Prüfung einer in Fahrtrichtung 40 gesehen vor dem Tauchfahrzeug 12 und den geradlinigen Abschnitt 4a mit dem Rohrbogen verbindenden Schweißnaht 10 mit der an der ebenfalls in Fahrtrichtung 40 gesehen vorderen Stirnseite angeordneten Prüfeinrichtung 20 werden die Spreizarme 16 zurückgefahren. Anschließend wird das Tauchfahrzeug 12 durch den bogenförmigen Abschnitt 4b hindurch in den nächsten geradlinigen Abschnitt 4a zu einer Position gefahren, in der mit der an der hinteren Stirnseite angeordnete Prüfeinrichtung 20 die Schweißnaht 10 geprüft werden kann, mit der der bogenförmige Abschnitt 4b mit dem in Fahrtrichtung 40 gesehen hinter ihm liegenden geradlinigen Bereich 4a verschweißt ist. Auf diese Weise können mit nur einer einzigen Tauchfahrt alle Schweißnähte 10 einer Hauptkühlmittelleitung 4 geprüft werden.

## Patentansprüche

1. Verfahren zum Prüfen einer ringförmigen Schweißnaht (10) einer an einen Reaktordruckbehälter (2) eines Kernkraftwerkes angeschlossenen Hauptkühlmittelleitung (4), bei dem in den geöffneten und gefluteten Reaktordruckbehälter (2) ein selbstfahrendes Tauchfahrzeug (12) eingebracht wird, das an jeder Stirnseite eine an die Innenumfangsfläche der Hauptkühlmittelleitung (4) anstellbare und in deren Umfangsrichtung verfahrbare Prüfeinrichtung (20) enthält, und bei dem das Tauchfahrzeug (12) in die ebenfalls geflutete Hauptkühlmittelleitung (4) eingefahren und durch radial ausfahrbare Spreizarme (16) im Bereich der Schweißnaht (10) fixiert wird, und bei dem anschließend die Prüfeinrichtung (20) an Schweißnaht (10) angestellt und entlang der Schweißnaht (10) in Umfangsrichtung verfahren wird.

2. Verfahren nach Anspruch 1, bei dem das Tauchfahrzeug (12) zum Prüfen einer Schweißnaht (10), mit der ein bogenförmiger Abschnitt (4b) der Hauptkühlmittelleitüng (4) an seinen Stirnseiten mit einem geradlinig verlaufenden Abschnitt (4a) der Hauptkühlmittelleitung (4) verschweißt ist, mit den Spreizarmen (16) in dem geradlinig verlaufenden Abschnitt (4a) der Hauptkühlmittelleitung (4) derart fixiert wird, dass eine die Prüfeinrichtung (20) enthaltende Stirnseite der Schweißnaht (10) zugewandt ist.

3. Verfahren nach Anspruch 1 oder 2, bei dem die Prüfeinrichtungen (20) am Tauchfahrzeug (12) um eine senkrecht zu den Stirnseiten verlaufende Mittenlängsachse (26) drehbar und senkrecht dazu radial ausfahrbar angeordnet sind.

4. Vorrichtung zum Prüfen von ringförmigen Schweißnähten einer an einen Reaktordruckbehälter (2) eines Kernkraftwerkes angeschlossenen Hauptkühlmittelleitung (4), bei der an einem Basiskörper (14) eines selbstfahrenden Tauchfahrzeuges (12) eine Mehrzahl von radial ausfahrbaren Spreizarmen (16) zum Fixieren des Tauchfahrzeuges (12) in der Hauptkühlmittelleitung (4) angeordnet sind characterisiert dadurch, dass an jeder Stirnseite des Tauchfahrzeugs (12) eine an die Innenumfangsfläche der Hauptkühlmittelleitung (4) anstellbare und in deren Umfangsrichtung verfahrbare Prüfeinrichtung (20) angeordnet ist.

5. Vorrichtung nach Anspruch 4, bei dem die Prüfeinrichtung (20) bzw. die Prüfeinrichtungen (20) am Tauchfahrzeug (12) um eine senkrecht zu den Stirnseiten verlaufende Mittenlängsachse (26) drehbar und senkrecht dazu radial ausfahrbar angeordnet sind.

6. Vorrichtung nach einem der Ansprüche 4 oder 5, bei dem die Spreizarme (16) in zwei voneinander beabstandeten, senkrecht zur Mittenlängsachse (26) orientierten Spreizebenen (32) angeordnet sind.

7. Vorrichtung nach Anspruch 6, bei dem in jeder Spreizebene (32) drei Spreizarme (16) vorgesehen sind.

8. Vorrichtung nach einem der Ansprüche 4 bis 7, bei dem an zumindest einer der Stirnseiten eine um die Mittenlängsachse (26) drehbar und um eine senkrecht zur Mittenlängsachse (26) orientierte Schwenkachse (36) schwenkbar gelagerte Inspektionskamera (38) angeordnet ist.

## Claims

1. Method for inspecting an annular weld (10) of a main coolant pipe (4) connected to a reactor pressure vessel (2) of a nuclear power plant, wherein a self-propelled submersible vehicle (12) is provided in the opened and flooded reactor pressure vessel (2), which contains an inspecting device (20) that can be positioned at the inner circumferential surface of the main coolant pipe (4) at each face and moved in the circumferential direction of said coolant pipe (4), and wherein the submersible vehicle (12) is introduced into the equally flooded main coolant pipe (4) and fixed in the weld region (10) by radially deployable spreading arms (16), and wherein the inspecting device (20) is subsequently positioned at the weld (10) and moved along the weld (10) in the circumferential direction.

2. Method according to claim 1, wherein, for inspecting a weld (10), with which a curved section (4b) of the main coolant pipe (4) is welded to a linear section (4a) of the main coolant pipe (4) at its front faces, the submersible vehicle (12) is fixed to the spreading arms (16) in the linear section (4a) of the main coolant pipe (4) in such a way that a front face containing the inspecting device (20) is facing the weld (10).

3. Method according to claim 1 or 2, wherein the inspecting devices (20) are arranged on the submersible vehicle (12) for rotation around a central longitudinal axis (26) perpendicular to the front faces and for radial deployment perpendicular thereto.

4. Device for inspecting annular welds of a main coolant pipe (4) connected to a reactor pressure vessel (2) of a nuclear power plant, wherein a plurality of radially deployable spreading arms (16) are arranged at a base body (14) of a self-propelled submersible vehicle (12) for fixing the submersible vehicle (12) in the main coolant pipe (4), **characterised in that** a test device (20) which can be positioned at the inner circumferential surface of the main coolant pipe (4) and moved in the circumferential direction of said coolant pipe (4) is arranged at each front face of the submersible vehicle (12).

5. Device according to claim 4, wherein the inspecting device(s) (20) are arranged on the submersible vehicle (12) for rotation around a central longitudinal axis (26) perpendicular to the front faces and for radial deployment perpendicular thereto.

6. Device according to one of claims 4 or 5, wherein the spreading arms (16) are arranged in two mutually spaced spread planes (32) orientated perpendicularly to the central longitudinal axis (26).

7. Device according to claim 6, wherein three spreading arms (16) are provided in each spread plane(32).

8. Device according to one of claims 4 to 7, wherein an inspection camera (38) on at least one of the front faces is arranged for rotation around the central longitudinal axis (26) and mounted rotatably around a rotational axis (36) orientated perpendicularly to the central longitudinal axis (26).

## Revendications

1. Procédé pour l'inspection d'une soudure annulaire (10) d'une conduite principale de fluide de refroidissement (4) raccordée à une cuve de réacteur sous pression (2) d'une centrale nucléaire, dans lequel un véhicule plongeur (12) automoteur introduit dans la cuve de réacteur sous pression (2) noyée et ouverte comporte, à chaque extrémité, un dispositif d'inspection (20) applicable contre la surface périphérique intérieure de la conduite principale de fluide de refroidissement (4) et déplaçable dans la direction du pourtour de celle-ci, et dans lequel le véhicule plongeur (12) est introduit dans la conduite principale de fluide de refroidissement (4) également noyée, et fixé dans la région de la soudure (10) par des bras d'écartement (16) déployables, et dans lequel le dispositif d'inspection (20) est ensuite appliqué contre la soudure (10) et déplacé le long de la soudure (10) dans la direction du pourtour.

2. Procédé selon la revendication 1, dans lequel, pour l'inspection d'une soudure (10) destinée à souder une section arquée (4b) de la conduite principale de fluide de refroidissement (4), à ses extrémités, avec une section s'étendant de façon rectiligne (4a), le véhicule plongeur (12) est fixé de telle manière, avec les bras d'écartement (16) dans la section s'étendant de façon rectiligne (4a) de la conduite principale de fluide de refroidissement (4), qu'une extrémité comprenant le dispositif d'inspection (20) est tournée vers la soudure (10).

3. Procédé selon la revendication 1 ou 2, dans lequel les dispositifs d'inspection (20) sont rotatifs autour d'un axe longitudinal médian (26) s'étendant perpendiculairement aux extrémités, tout en étant agencés de manière déployable radialement, perpendiculairement à celui-ci.

4. Dispositif pour l'inspection de soudures annulaires d'une conduite principale de fluide de refroidissement (4) raccordée à une cuve de réacteur sous pression (2) d'une centrale nucléaire, dans lequel une pluralité de bras d'écartement (16) déployables radialement sont agencés sur un corps de base (14) d'un véhicule plongeur (12) automoteur, pour fixer le véhicule plongeur (12) dans la conduite principale de fluide de refroidissement (4),
**caractérisé en ce que**
à chaque extrémité du conduite principale de fluide de refroidissement (4) se trouve un dispositif d'inspection (20) applicable contre la surface périphérique intérieure de la conduite principale de fluide de refroidissement (4) et déplaçable dans la direction du pourtour de celle-ci.

5. Dispositif selon la revendication 4, dans lequel le dispositif d'inspection (20) ou les dispositifs d'inspection (20) sont rotatifs autour d'un axe longitudinal médian (26) s'étendant perpendiculairement aux extrémités, tout en étant agencés de manière déployable radialement, perpendiculairement à celui-ci.

6. Dispositif selon l'une des revendications 4 ou 5, dans lequel les bras d'écartement (16) sont agencés dans deux plans d'écartement (32) orientés perpendiculairement à l'axe longitudinal médian (26) et espacés l'un de l'autre.

7. Dispositif selon la revendication 6, dans lequel trois bras d'écartement (16) sont prévus dans chaque plan d'écartement (32).

8. Dispositif selon l'une des revendications 4 à 7, dans lequel, à au moins l'une des extrémités, il est prévu une caméra d'inspection (38) montée de façon rotative autour de l'axe longitudinal médian (26), et de façon pivotante autour d'un axe de pivotement (36) orienté perpendiculairement à l'axe longitudinal médian (26).
